Europäisches Patentamt

European Patent Office

Office européen des brevets

(19)

(11) Veröffentlichungsnummer: **0 185 170**
**B1**

(12) **EUROPÄISCHE PATENTSCHRIFT**

(45) Veröffentlichungstag der Patentschrift: **19.12.90**

(51) Int. Cl.⁵: **B 23 B 31/34**

(21) Anmeldenummer: **85113562.4**

(22) Anmeldetag: **25.10.85**

(54) **Backenspannfutter für Drehmaschinen zur Bearbeitung von Werkstücken unter mehreren Bearbeitungsachsen.**

(30) Priorität: **21.12.84 DE 3446826**

(43) Veröffentlichungstag der Anmeldung:
**25.06.86 Patentblatt 86/26**

(45) Bekanntmachung des Hinweises auf die
Patenterteilung:
**19.12.90 Patentblatt 90/51**

(84) Benannte Vertragsstaaten:
**CH FR GB IT LI SE**

(56) Entgegenhaltungen:
**DE-A-1 930 870**
**FR-A-2 243 757**
**US-A-1 820 812**
**US-A-2 653 820**

**SOVIET INVENTIONS ILLUSTRATED, Sektion Mechanik, Woche K 15, 25. Mai 1983, Zusammenfassung Nr. F0141 P/54, Derwent Publications Ltd., London, GB; & SU - A - 933 286 (GRIGOREV) 07.06.1982**

(73) Patentinhaber: **Röhm, Günter Horst**
**Heinrich-Röhm-Strasse 50**
**D-7927 Sontheim (DE)**

(72) Erfinder: **Röhm, Günter Horst**
**Heinrich-Röhm-Strasse 50**
**D-7927 Sontheim (DE)**

(74) Vertreter: **Fay, Hermann, Dipl.-Phys. Dr.**
**Ensingerstrasse 21 Postfach 1767**
**D-7900 Ulm (Donau) (DE)**

# Beschreibung

Die Erfindung betrifft ein Backenspannfutter für Drehmaschinen zur Bearbeitung von Werkstükken unter mehreren, insbesondere mit zwei um ein bestimmtes Abstandsmaß auseinander liegenden und sich kreuzenden Bearbeitungsachsen, beispielsweise von Armaturengehäusen, mit einem an die Arbeitsspindel der Drehmaschine anschließbaren Futterkörper mit daran angeordnetem Spannwerk und Schwenkwerk, wobei zum Einspannen des Werkstücks mindestens eine Spannbacke vom Spannwerk verstellbar und vom Schwenkwerk das eingespannte Werkstück mitsamt den Spannbacken um eine zur Drehachse der Arbeitsspindel und zu den Bearbeitungsachsen des Werkstückes senkrechte Schwenkachse in durch die Richtung der Bearbeitungsachsen bestimmte Schwenkstellungen verschwenkbar ist, wobei ferner der Futterkörper in einen die Anschlußeinrichtung für die Arbeitsspindel aufweisenden Grundkörper und einen das Spannwerk und das Schwenkwerk tragenden Wendekörper unterteilt ist, wobei der Wendekörper am Grundkörper drehbar um eine zur Drehachse parallele Wendeachse gelagert ist, welche die Schwenkachse im Abstand des halben Abstandsmaßes von der Drehachse schneidet, und wobei der Wendekörper in den beiden Wendestellungen, in welchen die beiden Bearbeitungsachsen die Schwenkachse schneiden, am Grundkörper verriegelbar ist.

Mit einem solchen Backenspannfutter kann das Werkstück unter beiden Bearbeitungsachsen nacheinander bearbeitet werden, ohne daß das Werkstück umgespannt werden muß. Das zwischen den Spannbacken eingespannte Werkstück wird zunächst so ausgerichtet, daß es mit einer seiner Bearbeitungsachsen in der Drehachse liegt. Nach der Bearbeitung des Werkstücks in dieser Ausrichtung wird der Wendekörper um 180° gewendet, wodurch das Werkstück in eine Lage gelangt, in der die zweite Bearbeitungsachse die Drehachse schneidet. Es bedarf dann weiter nur noch der Drehung des Werkstücks um die Schwenkachse, damit diese Bearbeitungsachse in der Drehachse verläuft und somit das Werkstück auch unter dieser Bearbeitungsachse bearbeitet werden kann. Im Sonderfall von zueinander parallelen Bearbeitungsachsen entfällt die Schwenkbewegung und es genügt allein die Wendebewegung, um die Bearbeitungsachsen nacheinander in die Drehachse zu überführen.

Bei einem aus US-A-1 820 812 bekannten Backenspannfutter dieser Art sind der Wendekörper und der Grundkörper durch einen zweiteilig ausgebildeten Ring zusammengehalten, der den Wendekörper und den Grundkörper am äußeren Umfang umschließt und mit radial einwärts gerichteten Flanschen in Ringnuten am Wendekörper und am Grundkörper greift. Der Wendekörper muß von Hand verstellt werden, was umständlich und zeitaufwendig ist.

Der Erfindung liegt die Aufgabe zugrunde, ein Backenspannfutter der eingangs genannten Art so auszubilden, daß der Wendekörper durch eine automatische Kraftbetätigung angetrieben und verstellt werden kann.

Diese Aufgabe wird nach der Erfindung dadurch gelöst, daß zum Antrieb des Wendekörpers ein sich im Grundkörper konzentrisch um die Wendeachse erstreckender Kolbenraum vorgesehen ist, in dem ein mit dem Wendekörper verbundener Flügelkolben verläuft, wobei der Kolbenraum sich über mindestens den Wendewinkel des Wendekörpers erstreckt und beidseits des Flügelkolbens mit Druckmittel beaufschlagbar ist, daß ferner der Wendekörper einen zur Wendeachse koaxialen, in einem Ringraum des Grundkörpers gelagerten, hohlen Lagerzapfen aufweist, der den Flügelkolben trägt und von dem als zum Lagerzapfen hin offene Ringnut ausgebildeten Kolbenraum umgeben ist, daß in den Lagerzapfen ein Verteilerdorn des Grundkörpers greift, und daß in den einander zugewandten Umfangsflächen des Lagerzapfens und des Verteilerdorns axial gegeneinander abgedichtete Ringkanäle vorgesehen sind, die an im Grundkörper und im Wendekörper verlaufende Druckmittelkanäle zur Druckmittelversorgung des Spannwerks und des Schwenkwerks angeschlossen sind.

Im Ergebnis ist durch die Erfindung nicht nur eine Kraftbetätigung des Wendekörpers, sondern auch des Spannwerks und des Schwenkwerks über die zu deren Druckmittelversorgung im Wendekörper verlaufenden Druckmittelkanäle möglich.

Zur Verriegelung der Wendestellungen ist zweckmäßig im Grundkörper ein axial verstellbarer Verriegelungsbolzen geführt und sind im Wendekörper entsprechend seinen zu verriegelnden Wendestellungen Verriegelungsaufnahmen zum Eingriff des Verriegelungsbolzens vorgesehen. Zum Antrieb des Verriegelungsbolzens kann dieser an einem Axialkolben sitzen, der in einem Zylinderraum des Grundkörpers verschiebbar und beidseits mit Druckmittel beaufschlagbar ist. Im übrigen besteht die Möglichkeit, den Verriegelungsbolzen zur Stellungsrückmeldung an einen Mitnehmer anzuschließen, der mit einer zur Drehachse des Grundkörpers koaxialen Stellhülse im axialen Eingriff steht, die im Grundkörper verschiebbar und undrehbar geführt ist und aus dem Grundkörper in die hohle Arbeitsspindel vorsteht, so daß eine Weitermeldung der Stellhülsenbewegung und -stellung in einfacher Weise möglich ist. Um die durch die exzentrische Anordnung von Grundkörper und Wendekörper bedingte Unwucht auszugleichen, kann der Grundkörper auf der der Wendeachse gegenüber liegenden Seite der Drehachse ein Unwuchtausgleichsgewicht tragen.

Im folgenden wird die Erfindung an einem in der Zeichnung dargestellten Ausführungsbeispiel näher erläutert; es zeigen:

Fig. 1 einen Längsschnitt durch ein Backenspannfutter nach der Erfindung,

Fig. 2 eine Stirnansicht des Spannfutters nach Fig. 1 von vorn, und

Fig. 3 den Schwenkantrieb des Schwenkwerks in gegenüber den Fig. 1 bis 3 vergrößerter Darstellung.

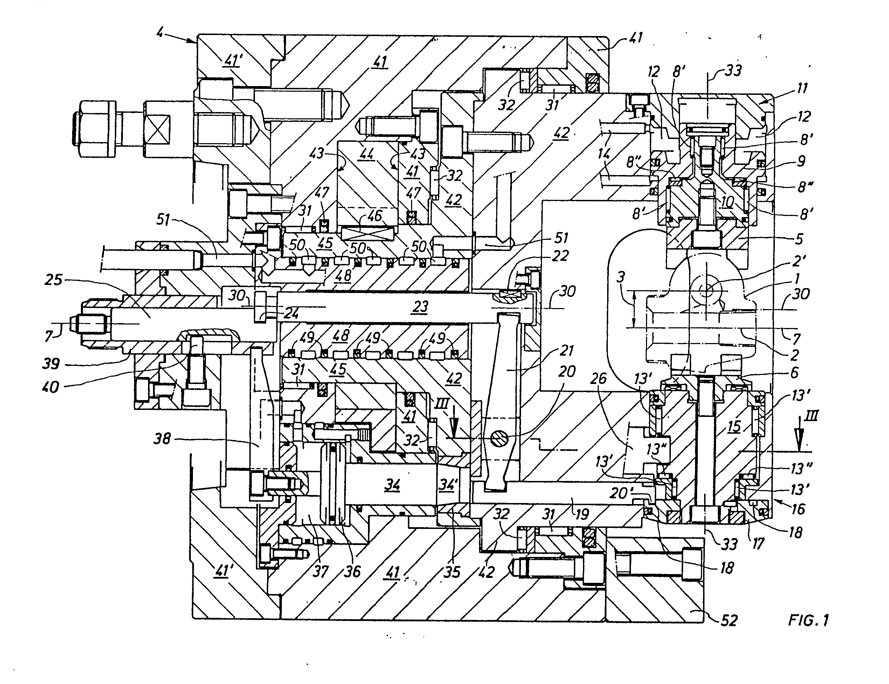

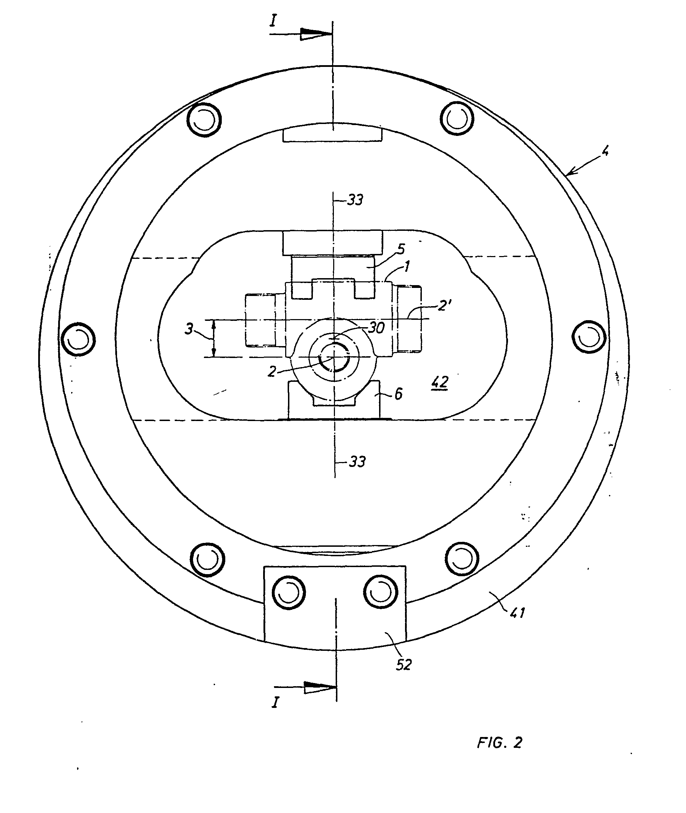

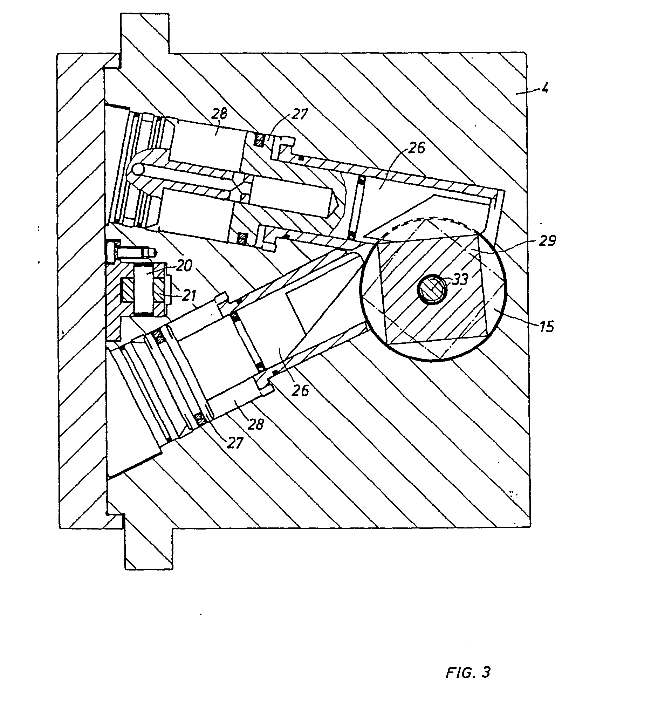

Das in der Zeichnung dargestellte Backenspannfutter dient zur Bearbeitung von Werkstücken 1 unter zwei sich kreuzenden Bearbeitungsachsen 2, 2', die in einem vorgegebenen, in den Fig. 1 und 2 durch den Doppelpfeil 3 gekennzeichneten Abstand voneinander verlaufen. Das Backenspannfutter besitzt einen allgemein mit 4 bezeichneten Futterkörper, der mit seiner Rückseite an eine nicht dargestellte Arbeitsspindel einer Drehmaschine anschließbar ist. Der Futterkörper 4 trägt zwei Spannbacken 5, 6, die sich diametral zur Drehachse 7 des Futterkörpers 4 gegenüberstehen und zwischen sich das Werkstück 1 aufnehmen, wozu die beiden Spannbacken auswechselbar als dem Werkstück 2 jeweils angepaßte Formbacken angeordnet sind. Die Spannbacke 5 sitzt an einem Backenhalter 10, der über Radiallager 8' drehbar im Spannkolben 9 eines allgemein mit 11 bezeichneten Spannwerkes gelagert und über Axiallager 8'' axial gegen den Spannkolben 9 abgestützt ist. Der Spannkolben 9 bewegt sich radial zur Drehachse 7 in einem Spannzylinder 12, der beidseits des Spannkolbens 9 an Druckmittelleitungen 14 angeschlossen ist, durch die der Spannkolben 9 wahlweise auf der einen oder anderen Seite vom Druckmittel beaufschlagt werden kann. Die Spannbacke 6 ist an der Schwenkwelle 15 eines allgemein mit 16 bezeichneten Schwenkwerkes gehalten, wobei die Schwenkwelle 15 über Radiallager 13' um eine Schwenkachse 33 drehbar im Schwenkwerkgehäuse gelagert und über Axiallager 13'' axial gegen die Spannkraft der Spannbacke 5 abgestützt ist. Die Schwenkachse 33 bildet auch die Drehachse für den Backenhalter 10, so daß die Spannbacken 5, 6 sich koaxial zur Schwenkachse 33 drehen können. Die Schwenkwelle 15 ist drehfest mit einem Ring 17 verbunden, der eine Plankurve 18 zur Steuerung eines Kontrollstößels 19 aufweist, der mit einer Nase 20' in die Plankurve B greift. Die Drehung der Schwenkwelle 15 hat über die Plankurve 18 eine axiale Verschiebung des Kontrollstößels 19 zur Folge, der entsprechend einen bei 20 im Futterkörper 4 gelagerten Schwenkhebel 21 verstellt, der seinerseits einen mittels Feder und Nut 22 undrehbar im Futterkörper 4 axial verschieblichen Stab 23 verstellt, der bei 24 axial mit einem Bolzen 25 im Eingriff steht, der koaxial mit der Drehachse 7 des Futterkörpers 4 angeordnet ist und in die hohle Antriebsspindel der Drehmaschine vorsteht. Die Schwenkbewegung und -stellung der Schwenkwelle (15) äußert sich im Ergebnis in entsprechenden Axialbewegungen und -stellungen des Bolzens 25, wodurch Rückmeldungen der Schwenkwellenstellung durch die hohle Antriebsspindel möglich werden. Zum Antrieb der Schwenkwelle 15 dienen im einzelnen aus Fig. 3 ersichtliche Schwenkstößel 26. Sie sind in ihren Längsrichtungen um einen Teil des Schwenkwinkels der Schwenkwelle 15 gegeneinander versetzt im Futterkörper 4 angeordnet und längsverschiebbar geführt und je an einen Stellkolben 27 angeschlossen, der in einem Zylinderraum 28 verschiebbar ist und darin beidseits von Druckmittel beaufschlagbar ist. Die Druckstößel 26 wirken durch entsprechende Steuerung des Druckmittels nacheinander auf einen an der Schwenkwelle 15 ausgebildeten oder mit ihr getriebemäßig verbundenen Vierkant 29, so daß die vom Druckmittel beaufschlagten Druckstößel 26 im Ergebnis nicht nur ein Verschwenken der Schwenkwelle 15, der an ihr angeschlossenen Spannbacke 6 und damit auch des eingespannten Werkstückes 1, sondern auch eine Verriegelung derselben bewirken. Im Ausführungsbeispiel erfolgt die Verschwenkung der Schwenkwelle 15 sowie deren entsprechende Verriegelung in jeweils um 90° gegeneinander verdrehten Schwenkstellungen entsprechend dem Umstand, daß die beiden Bearbeitungsachsen 2, 2' des Werkstückes 1 zueinander senkrecht stehen. Bilden diese beiden Bearbeitungsachsen 2, 2' einen von 90° verschiedenen Winkel, ändern sich entsprechend die durch die Druckstößel 26 eingestellten und verriegelten Schwenkstellungen der Schwenkwelle 15.

Der Futterkörper 4 ist in einen Grundkörper 41 und einen Wendekörper 42 unterteilt. Der mehrteilig zusammengesetzte Grundkörper 41 trägt die Anschlußeinrichtung für die Arbeitsspindel, nämlich einen Futterflansch 41' mit Kegelaufnahme und Anschlußbolzen. Der Futterflansch 41' ist mit dem restlichen Teil des Grundkörpers 41 verschraubt. Der Wendekörper 42 trägt das Spannwerk 11 und das Schwenkwerk 16 und ist um wenigstens 180° am Grundkörper 41 drehbar um eine zur Drehachse 7 parallele Wendeachse 30 und axial unverschiebbar gelagert, und zwar im einzelnen über Radiallager 31 und Axiallager 32. Die Wendeachse 30 schneidet die Schwenkachse 33 in einem Abstand, der gleich dem halben Abstand 3 zwischen den Bearbeitungsachsen 2, 2' des Werkstückes 1 ist. Die Drehachse 7, die Wendeachse 30 und die Schwenkachse 33 liegen somit in einer gemeinsamen Ebene. In den um 180° auseinander liegenden beiden Wendestellungen, in welchen die beiden Bearbeitungsachsen 2 bzw. 2' die Schwenkachse 33 schneiden, ist der Wendekörper 42 am Grundkörper 41 verriegelbar. Dazu dient ein im Grundkörper 41 axial verstellbarer Verriegelungsbolzen 34. Im Wendekörper 42 sind entsprechend seinen zu verriegelnden Wendestellungen durch Buchsen gebildete Verriegelungsaufnahmen 35 zum Eingriff des Verriegelungsbolzen 34 vorgesehen. Die Verriegelungsaufnahmen 35 öffnen sich konisch zum Verriegelungsbolzen 34 hin, der mit einem entsprechend konisch ausgebildeten Verriegelungskopf 34' in die Verriegelungsaufnahmen 35 eingreift und dadurch eine Justierung der Wendestellung des Wendekörpers 42 gegenüber dem Grundkörper 41 bewirkt. Der Verriegelungsbolzen 34 sitzt an einem Axialkolben 36, der in einem Zylinderraum 37 des Grundkörpers 41 verschiebbar und beidseits mit Druckmittel beaufschlagbar ist, und kann somit je nach Steuerung des Druckmittels aus den Verriegelungsaufnahmen 35 herausgezogen oder in sie hineingedrückt werden. Zur Stellungsrückmeldung ist der Verriegelungsbolzen 34 an einen Mitnehmer 38 angeschlossen, der seinerseits mit einer zur Drehachse 7 des Grundkörpers 41 koaxialen Stellhülse 39 im axialen Eingriff steht. Diese den Bolzen 25 koaxial aufnehmende Stellhülse 39 ist im Grundkörper 41 verschiebbar und mittels eine Schraube 40 undrehbar geführt und steht ebenso wie der Bolzen 25 aus dem Grundkörper 41 in die hohle Arbeitsspindel vor, so daß die durch die Stellhülse 39 bewirkte Meldung der Stellung des Verriegelungsbolzens 34 in ähnlicher Weise wie die von dem Bolzen 25 bewirkte Meldung der Schwenkstellung der Schwenkwelle 15 durch die Arbeitsspindel weitergeführt und in geeigneter Weise abgenommen werden kann.

Zum Antrieb des Wendekörpers 42 ist eine Zylinder-Kolbenanordnung vorgesehen, die einen Kolbenraum 43 aufweist, der sich in seiner Längsrichtung im Grundkörper 41 konzentrisch um die Wendeachse 30 erstreckt. In diesem Kolbenraum 43 läuft ein fest mit dem Wendekörper 42 verbundener Flügelkolben 44. Der Kolbenraum 43 erstreckt sich über einen Bogen von mindestens dem Wendewinkel des Wendekörpers 42 und ist beidseits des Flügelkolbens 44 in im einzelnen aus der Zeichnung nicht erkennbarer Weise mit Druckmittel beaufschlagbar, so daß je nach Steuerung des Druckmittels der Flügelkolben 44 und mit ihm der Wendekörper 42 in der einen oder anderen Drehrichtung um die Wendeachse 30 bewegt werden kann. Im einzelnen besitzt der Wendekörper 42 einen zur Wendeachse 30 koaxialen und in einen entsprechenden Ringraum des Grundkörpers 41 hineinragenden hohlen Lagerzapfen 45, der über eine Nut- und Federverbindung 46 undrehbar den Flügelkolben 44 trägt.

Der Kolbenraum 43 bildet eine zu diesem Lagerzapfen 45 hin offene Ringnut, die bei 47 gegen den Lagerzapfen 45 abgedichtet ist. In den Lagerzapfen 45 greift ein am Grundkörper 41 fester, ebenfalls hohler Verteilerdorn 48, in dessen Hohlraum der zur Wendeachse koaxiale Stab 23 geführt ist. In den einander zugewandten Umfangsflächen des Lagerzapfens 45 und des Verteilerdorns 48 sind axial jeweils bei 49 gegeneinander abgedichtete Ringkanäle 50 vorgesehen, die an Druckmittelkanäle 51 angeschlossen sind, die zur Druckmittelversorgung des Spannwerks 11 und des Schwenkwerks 16 im Grundkörper 41 und im Wendekörper 42 verlaufen. Diese Druckmittelkanäle 51 sind über den Umfang des Verteilerdorns 48 bzw. Lagerzapfens 45 verteilt angeordnet, so daß von ihnen in Fig. 1 jeweils nur ein Druckmittelkanal 51 ersichtlich ist.

Am Grundkörper 41 ist auf der der Wendeachse 30 gegenüber liegenden Seite der Drehachse 7 ein Unwuchtausgleichsgewicht 52 angeordnet, das die durch die Exzentrizität von Drehachse 7 und Wendeachse 30 erzeugte Unwucht des Bakkenspannfutters kompensiert.

Ist das Werkstück 1 gemäß seiner Einspannung in den Fig. 1 und 2 unter der mit der Drehachse 7 zusammenfallenden Bearbeitungsachse 2 bearbeitet, wird der Wendekörper 42 um die Wendeachse 30 gegenüber dem Grundkörper 41 um 180° gedreht, wodurch auch das Werkstück 1 um die Wendeachse 30 um 180° gewendet wird und die zuvor außerhalb der Drehachse 7 liegende Bearbeitungsachse 2' nun die Drehachse 7 schneidet, während die zuvor in der Drehachse 7 liegende Bearbeitungsachse 2 um den doppelten Abstand zwischen Wendeachse 30 und Drehachse 7 verlagert ist. Anschließend wird mittels des Schwenkwerkes 16 das Werkstück 1 um 90° gedreht, wodurch die Bearbeitungsachse 2' in die Drehachse 7 ausgerichtet wird. Die andere Bearbeitungsachse 2, unter der das Werkstück 1 bereits bearbeitet ist, tritt damit an Stelle der ursprünglichen Lage der jetzt in der Drehachse 7 liegenden zweiten Bearbeitungsachse 2'. Im Sonderfall parallel liegender Bearbeitungsachsen 2, 2' genügt eine Drehung des Wendekörpers 42 nur um die Wendeachse 30 um 180° ohne weitere Schwenkbewegung der Schwenkwelle 15, um die beiden Bearbeitungsachsen 2, 2' wechselweise in die Drehachse 7 zu überführen.

**Patentansprüche**

1. Backenspannfutter für Drehmaschinen zur Bearbeitung von Werkstücken (1) unter mehreren, insbesondere mit zwei um ein bestimmtes Abstandsmaß (3) auseinander liegenden und sich kreuzenden Bearbeitungsachsen (2, 2'), beispielsweise von Armaturengehäusen, mit einem an die Arbeitsspindel der Drehmaschine anschließbaren Futterkörper (4) mit daran angeordnetem Spannwerk (11) und Schwenkwerk (16), wobei zum Einspannen des Werkstücks (1) mindestens eine Spannbacke (5) vom Spannwerk (11) verstellbar und vom Schwenkwerk (16) das eingespannte Werkstück (1) mitsamt den Spannbacken (5, 6) um eine zur Drehachse (7) der Arbeitsspindel und zu den Bearbeitungsachsen (2, 2') des Werkstücks (1) senkrechte Schwenkachse (33) in durch die Richtungen der Bearbeitungsachsen (2, 2') bestimmte Schwenkstellungen verschwenkbar ist, wobei ferner der Futterkörper (4) in einen die Anschlußeinrichtung für die Arbeitsspindel aufweisenden Grundkörper (41) und einen das Spannwerk (11) und das Schwenkwerk (16) tragenden Wendekörper (42) unterteilt ist, wobei der Wendekörper (42) am Grundkörper (41) drehbar um eine zur Drehachse (7) parallele Wendeachse (30) gelagert ist, welche die Schwenkachse (33) im Abstand des halben Abstandsmaßes (3) von der Drehachse (7) schneidet, und wobei der Wendekörper (42) in den beiden Wendestellungen, in welchen die beiden Bearbeitungsachsen (2, 2') die Schwenkachse (33) schneiden, am Grundkörper (41) verriegelbar ist, dadurch gekennzeichnet, daß zum Antrieb des Wendekörpers (42) ein sich im Grundkörper (41) konzentrisch um die Wendeachse (30) erstreckender Kolbenraum (43) vorgesehen ist, in dem ein mit dem Wendekörper (42) verbundener Flügelkolben (44) verläuft, wobei der Kolbenraum (43) sich über mindestens den Wendewinkel des Wendekörpers (42) erstreckt und beidseits des Flügelkolbens (44) mit Druckmittel beaufschlagbar ist, daß der Wendekörper (42) einen zur Wendeachse (30) koaxialen, in einem Ringraum des Grundkörpers (41) gelagerten, hohlen Lagerzapfen (45) aufweist, der den Flügelkolben (44) trägt und von dem als zum Lagerzapfen (45) hin offene Ringnut ausgebildeten Kolbenraum (43) umgeben ist, daß in den Lagerzapfen (45) ein Verteilerdorn (48) des Grundkörpers (41) greift, und daß in den einander zugewandten Umfangsflächen des Lagerzapfens (45) und des Verteilerdorns (48) axial gegeneinander abgedichtete Ringkanäle (50) vorgesehen sind, die an im Grundkörper (41) und im Wendekörper (42) verlaufende Druckmittelkanäle (51) zur Druckmittelversorgung des Spannwerks (11) und des Schwenkwerks (16) angeschlossen sind.

2. Spannfutter nach Anspruch 1, dadurch gekennzeichnet, daß im Grundkörper (41) ein axial verstellbarer Verriegelungsbolzen (34) geführt ist, und daß im Wendekörper (42) entsprechend seinen zu verriegelnden Wendestellungen Verriegelungsaufnahmen (35) zum Eingriff des Verriegelungsbolzens (34) vorgesehen sind.

3. Spannfutter nach Anspruch 2, dadurch gekennzeichnet, daß der Verriegelungsbolzen (34) an einem Axialkolben (36) sitzt, der in einem Zylinderraum (37) des Grundkörpers (41) verschiebbar und beidseits mit Druckmittel beaufschlagbar ist.

4. Spannfutter nach Anspruch 2 oder 3, dadurch gekennzeichnet, daß der Verriegelungsbolzen (34) zur Stellungsrückmeldung an einen Mitnehmer (38) angeschlossen ist, der mit einer zur Drehachse (7) des Grundkörpers (41) koaxialen Stellhülse (39) im axialen Eingriff steht, die im Grundkörper (41) verschiebbar und unddrehbar geführt ist und aus dem Grundkörper (41) in die hohle Arbeitsspindel vorsteht.

5. Spannfutter nach einem der Ansprüche 1 bis 4, dadurch gekennzeichnet, daß der Grundkörper (41) auf der Wendeachse (30) gegenüberliegenden Seite der Drehachse (7) ein Unwuchtausgleichsgewicht (52) trägt.

**Revendications**

1. Mandrin de serrage à mâchoires pour tours pour l'usinage de pièces (1) sous plusieurs axes d'usinage (2, 2'), en particulier sous deux axes d'usinage séparés d'une distance (3) déterminée et se croisant, par exemple de corps d'appareils de robinetterie, comprenant un corps de mandrin (4) pouvant être raccordé à l'arbre moteur du tour et équipé d'un mécanisme de serrage (11) et d'un mécanisme de pivotement (16), au moins l'une des mâchoires de serrage (5) pouvant être déplacée pour la fixation de la pièce à usiner (1) par le mécanisme de serrage (11) et la pièce à usiner (1) fixée, y compris les mâchoires de serrage (5, 6), pouvant être tournée par le mécanisme de pivotement (16) autour d'un axe de pivotement (33) perpendiculaire à l'axe de rotation (7) de l'arbre moteur et aux axes d'usinage (2, 2') de la pièce (1) et amenée dans des positions de pivotement définies par l'orientation des axes d'usinage (2, 2'), le corps de mandrin (4) étant, en outre, subdivisé en un corps de base (41) avec le dispositif de raccordement pour l'arbre moteur et en un corps de retournement (42) qui porte le mécanisme de serrage (11) et le mécanisme de pivotement (16), le corps de retournement (42) étant monté sur le corps de base (41) de manière à pouvoir tourner autour d'un axe de retournement (30) parallèle à l'axe de rotation (7), lequel axe de retournement coupe l'axe de pivotement (33) à la moitié de la distance (3) de l'axe de rotation (7), et le corps de retournement (42) pouvant être verrouillé sur le corps de base (41) dans les deux positions de retournement dans lesquelles les deux axes d'usinage (2, 2') coupent l'axe de pivotement (33), caractérisé par le fait que, pour l'entraînement du corps de retournement (42), il est prévu un espace de piston (43) qui s'étend dans le corps de base (41) concentriquement autour de l'axe de retournement (30) et dans lequel se déplace un piston à ailettes (44) relié au corps de retournement (42), l'espace de piston (43) s'étendant sur au moins l'angle de retournement du corps de retournement (42) et pouvant être alimenté des deux côtés du piston à ailettes (44) en fluide sous pression; que le corps de retournement (42) présente un tourillon creux (45) coaxial à l'axe de retournement (30) et placé dans un espace annulaire du corps de base (41), lequel tourillon porte le piston à ailettes (44) et est entouré par l'espace de piston (43) conformé en rainure annulaire ouverte en direction du tourillon (45); que dans le tourillon (45) s'engage un mandrin distributeur (48) du corps de base (41); et que dans les surfaces circonférentielles du tourillon (45) et du mandrin distributeur (48) dirigées l'une vers l'autre sont prévus des canaux annulaires (50) étanches les uns par rapport aux autres dans le sens axial qui sont raccordés à des canaux de fluide sous pression (51) lesquels s'étendent à l'intérieur du corps de base (41) et du corps de retournement (42) pour assurer l'alimentation en fluide sous pression du mécanisme de serrage (11) et du mécanisme de pivotement (16).

2. Mandrin de serrage selon la revendication 1, caractérisé par le fait qu'un boulon de verrouillage (34) déplaçable dans le sens axial est guidé dans le corps de base (41), et que des logements de verrouillage (35) pour la réception du boulon de verrouillage (34) sont prévus dans le corps de retournement (42) en fonction de ses positions de retournement à verrouiller.

3. Mandrin de serrage selon la revendication 2, caractérisé par le fait que le boulon de verrouillage (34) est monté sur un piston axial (36) qui peut être déplacé dans un cylindre (37) du corps de base (41) et alimenté des deux côtés en fluide sous pression.

4. Mandrin de serrage selon l'une des revendications 2 ou 3, caractérisé par le fait que, pour la répétition de la position, le boulon de verrouillage (34) est relié à un toc d'entraînement (38) qui coopère axialement avec une douille de réglage (39) coaxiale à l'axe de rotation (7) du corps de base (41), laquelle est guidée de manière mobile et rigide en rotation dans le corps de base (41) et dépasse à partir du corps de base (41) dans l'arbre moteur creux.

5. Mandrin de serrage selon l'une quelconque des revendications 1 à 4, caractérisé par le fait que le corps de base (41) porte du côté de l'axe de rotation (7) opposé à l'axe de retournement (30) un poids d'équilibrage des masses (52).

**Claims**

1. A clamping jaw chuck for turning machines for machining workpieces (1) on a plurality of and in particular with two machining axes (2, 2') which are spaced apart by a given spacing (3) and which intersect each other, for example of fitting casings, comprising a chuck body (4) which can be connected to the working spindle of the turning lathe, with a clamping mechanism (11) and pivoting mechanism (16) arranged on the chuck body, wherein at least one clamping jaw (5) is displaceable by the clamping mechanism (11) for clamping the workpiece (1) in position and the clamped workpiece (1) together with the clamping jaws (5, 6) can be pivoted by the pivoting mechanism (16) about a pivot axis (33) which is normal to the axis of rotation (7) of the working spindle and the machining axes (2, 2') of the workpiece (1), into pivotal positions which are determined by the directions of the machining axes (2, 2'), wherein moreover the chuck body (4) is divided into a main body (41) having the connecting means for the working spindle and a turn body (42) which bears the clamping mechanism (11) and the pivoting mechanism (16), wherein the turn body (42) is mounted on the main body (41) rotatably about a turn axis (30) which is parallel to the axis of rotation (7) and which intersects the pivot axis (33) at the spacing of half the spacing (3) from the axis of rotation (7) and wherein the turn body (42) can be locked on the main body (41) in the two turn positions in which the two machining axes (2, 2') intersect the pivot axis (33), characterised in that provided for driving the turn body (42) is a piston chamber (43) which extends in the main body (41) concentrically about the turn axis (30) and in which a vane-type piston (44) connected to the turn body (42) is displaced, wherein the piston chamber (43) extends over at least the angle of turning movement of the turn body (42) and can be supplied with pressure fluid on both sides of the vane-type piston (44), that the turn body (42) has a hollow mounting trunnion (45) which is coaxial with the turn axis (30) and which is mounted in an annular space in the main body (41) and which carries the vane-type piston (44) and which is surrounded by the piston chamber (43) which is in the form of an annular groove open towards the mounting trunnion (45), that a distributor stem portion (48) of the main body (41) engages into the mounting trunnion (45), and that provided in the mutually facing peripheral surfaces of the mounting trunnion (45) and the distributor stem portion (48) are annular passages (50) which are axially sealed off relative to each other and which are connected to pressure fluid passages (51) in the main body (41) and in the turn body (42), for supplying pressure fluid to the clamping mechanism (11) and the pivoting mechanism (16).

2. A chuck according to claim 1 characterised in that an axially displaceable locking pin (34) is guided in the main body (41) and that locking receiving means (35) for engagement therein of the locking pin (34) are provided in the turn body (42), corresponding to the turn positions in which it is to be locked.

3. A chuck according to claim 2 characterised in that the locking pin (34) is carried on an axial piston (36) which is displaceable in a cylinder chamber (37) in the main body (41) and which can be actuated with pressure fluid on both sides.

4. A chuck according to claim 2 or claim 3 characterised in that for the purposes of providing an indication of position, the locking pin (34) is connected to an entrainment member (38) which is in axial engagement with a control sleeve (39), which control sleeve (39) is coaxial with respect to the axis of rotation (7) of the main body (41) and is slidably and non-rotatably guided in the main body (41) and projects out of the main body (41) into the hollow working spindle.

5. A chuck according to one of claims 1 to 4 characterised in that the main body (41) carries an unbalance compensating weight (52) on the side of the axis of rotation (7) which is opposite to the turn axis (30).

FIG.1

EP 0 185 170 B1

EP 0 185 170 B1

FIG. 2

2

*FIG. 3*